# EUROPEAN PATENT APPLICATION

(11) **EP 0 894 977 A1**
(43) Date of publication of application: **03.02.1999**
(21) Application number: 97830402.0
(22) Date of filing: 31.07.1997
(51) Int. Cl.: F03D 3/04, F03D 3/02

(54) **Wind turbine with wind funneling means**

(71) Applicant: Zini, Carlo, 43010 Parma (IT); Achilli, Giovanni, 29100 Piacenza (IT)
(72) Inventor: Zini, Carlo, 43010 Parma (IT); Achilli, Giovanni, 29100 Piacenza (IT)
(74) Representative: Gotra, Stefano

(57) **Abstract**

The invention falls within the sector of wind engines. Two movable panels (2) which are arranged facing one another and mutually inclined are fastened to a framework (3) containing two rotors (1), on the side of the said framework containing the opening for capturing the wind.

## Description

The present invention relates to a wind engine equipped with wind conveyors.

For some time now systems which exploit the energy of the wind have been produced, but more recently the growing demand for energy which is clean and available in larger quantities has resulted in the design and manufacture of highly sophisticated wind engines or aeolian engines as they are also known.

These systems, by exploiting the kinetic energy of the wind which rotates a plurality of vanes arranged radially with respect to an axis of rotation, enable mechanical and electric energy to be obtained.

Depending on the arrangement and form of the vanes wind engines of the drum type or propeller type may be obtained and, of the latter, at present two types are used: the type known as the "full-rose" type having a large number of vanes connected by two rings and used almost exclusively to drive pumps for raising water from a well located directly underneath the pylon supporting the engine; another type is that consisting of a small number of large-diameter vanes of variable pitch based on highly sophisticated technology taken from the aeronautical sector.

A common feature of all the types of wind engines currently used is the need to arrange them above a pylon of considerable height in order to capture the wind under the most favourable conditions possible; said pylon poses problems with regard to realization and the construction and installation costs.

As regards wind engines of the drum type, they have the drawback that half of the diameter of their rotors must be screened in order to obtain rotation of the rotors themselves and this fact substantially limits their efficiency.

The object of the wind engine according to the present invention is that of providing a wind engine able to channel a greater quantity of wind than that which has been possible hitherto for the same dimensions of the rotor and without the traditional high supporting pylon.

These and other objects are all achieved by the wind engine equipped with wind conveyors according to the present invention, characterized in that one or more rotors have arranged in front of them, in the direction of arrival of the wind, one or more movable or fixed panels arranged facing each other and mutually inclined, said inclination being such that the distance between the front external edges of the said panels is greater than the distance between the internal edges of the said panels located opposite the said rotors, said panels conveying the wind into the driving section of the rotors.

These and other characteristic features will emerge more clearly from the following description of three preferred embodiments illustrated, purely by way of a non-limiting example, in the accompanying illustrative plates, in which:

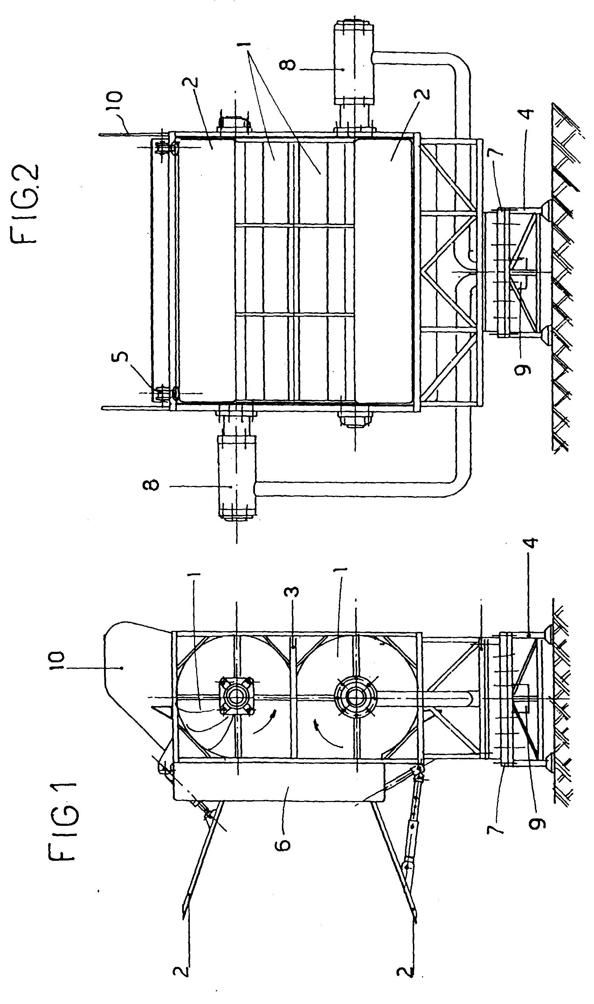

Figure 1 shows a side view of the wind engine;
Figure 2 shows a front view of the wind engine according to Figure 1;

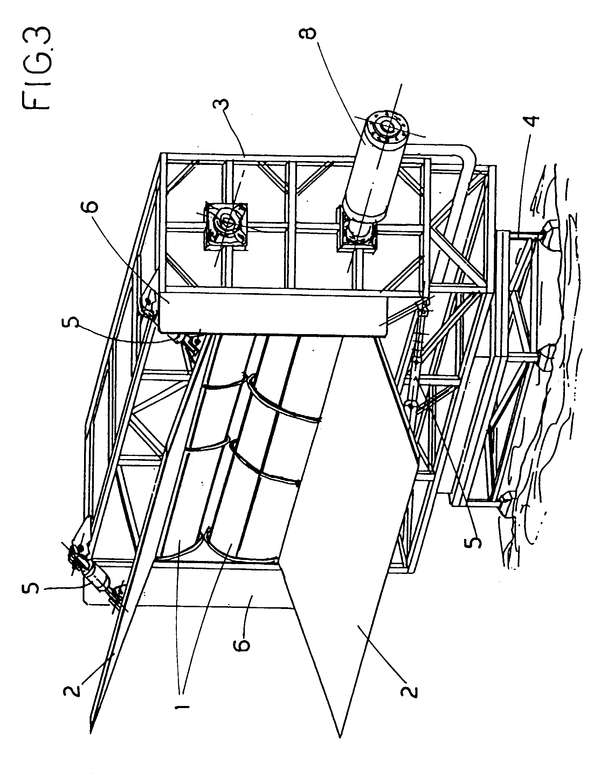

Figure 3 shows a front perspective view of the wind engine according to Figure 1;
Figure 4 shows a perspective view of a second embodiment of a wind engine;
Figure 5 shows a perspective view of a third embodiment of a wind engine.

Two rotors 1 of the drum type with horizontal axes of rotation parallel with one another are arranged inside a housing framework 3; said framework is mounted on a base 4 via a circular guide 7.

Two movable panels 2 arranged facing one another are fastened onto the side surface of the said framework oriented in the direction of arrival of the wind, parallel to the axes of rotation of the rotors 1 and with the possibility of rotation; said panels are fixed to the framework 3 so as to be inclined with respect to one another with an inclination decreasing towards the rotors 1.

The said inclination ensures that the aperture existing at the inlet of the two movable panels 2 is greater than that existing at the outlet thereof towards the rotors 1.

Drive elements 5, consisting of jacks in the example illustrated, are positioned between the framework 3 and the movable panels 2 so as to allow rotation of the latter about the respective points where they are fastened to the said framework.

Two deflectors 6 are positioned, opposite one another, on the same side of the framework 3 to which the movable panels 2 are fastened, but they are fixed perpendicularly with respect thereto and substantially flush with the framework itself.

Two dynamos 8 are each keyed onto an extension of the axis of rotation of each rotor 1; these dynamos convey the electric energy generated to a rotating commutator 9 located between the framework 3 and base 4.

One or more rudders 10 are integrally fastened to the top of the framework 3.

Operation of the wind engine according to the present invention will now be described with reference to the Figures.

The framework 3 is oriented automatically with its front facing the direction of arrival of the wind as a result of the rudders 10 which cause rotation of the framework 3 with respect to the base 4 above the circular guide 7.

By means of the drive elements 5, the mutual inclination of the movable panels 2 is regulated so as to adjust the aperture for capturing the wind both on the basis of the force of the latter and on the basis of the speed at which it strikes the vanes of the rotors 1; the quantity of wind which is thus channelled between the two movable panels 2 and the two deflectors 6 is greater than would normally be the case.

The said deflectors 6 prevent fluid streams from escaping in the vicinity of the rotors 1.

Owing to the presence of the movable panels 2, the wind which reaches the aforementioned rotors is greater not only in terms of quantity, but also in terms of speed; in fact, the channel formed by the two movable panels 2 narrows in the vicinity of the rotors 1, causing constriction of the fluid and hence an increase in the speed thereof owing to the Venturi effect.

In practice it has been noted that the ideal position of the panels is that where the area of the inlet section is twice the area of the driving section of the rotors.

The greater mass of air and greater speed thereof increase considerably the performance of the wind engine according to the present invention.

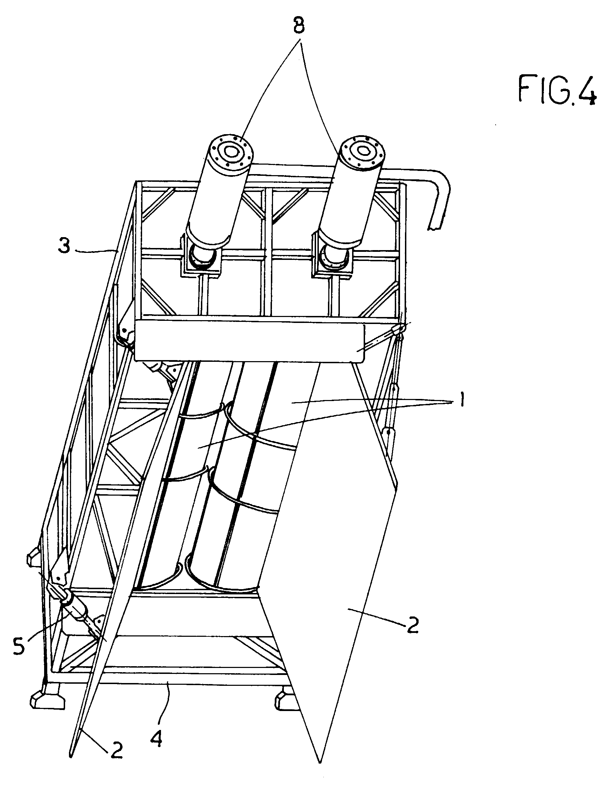

The accompanying drawings show the wind engine with the axes of the rotors oriented parallel to the ground, but it is obvious that the arrangement of the rotors themselves could also be vertical, as illustrated in Figure 4.

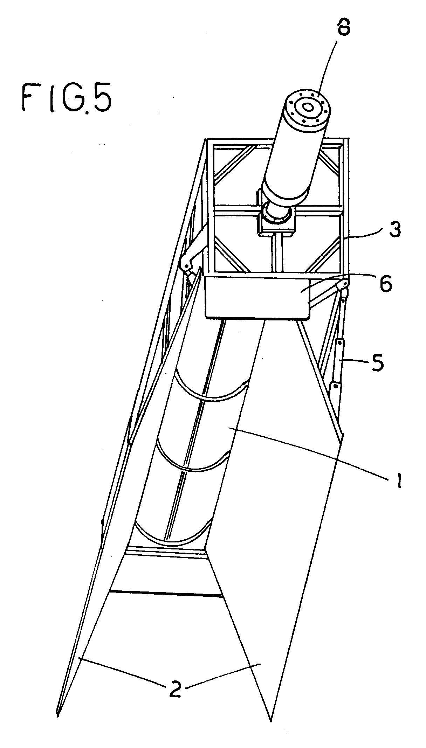

According to a further embodiment shown in Figure 5, the framework 3 contains a single drum-type rotor, the rotating shaft of which is integrally connected to a dynamo with the cables conveying the generated current passing through a tubular element coaxial with the axis of rotation of the single drum rotor; this results in simplification from a constructional point of view and, in particular, elimination of the rotating commutator 9.

Full use of the electric energy produced by the wind engine is thus obtained since the losses due to the sliding contacts present in the said rotating commutator are eliminated.

One possible application of the said embodiment consists in equipping a wide range of vehicles such as motor cars, motor cycles, boats, etc. with a wind engine of this type constructed on a smaller scale; in the case of boats, for example, the use of such a current generator would be greatly facilitated by the constant presence of wind on the open stretches of water and could supply the power for the navigation lights which must remain lit during the nighttime hours, without the drawback of the noise produced by traditional generators.

A third possible embodiment envisages the use of extendable panels, the mobility of each of which consists in the telecopic extension of a plurality of flat elements each forming the said panels.

The operating mode of said additional embodiment consists in sliding telescopically on one another the various elements which, in the case of each panel, are stacked on top of one another when the panels themselves are located in the minimum opening position.

This opening system of the panels produces a wind capturing aperture of the same magnitude as that which can be obtained with movable panels having a rotational opening system, but with a smaller angle of impact between the wind and panels themselves; in this way a substantial reduction in the force which is transmitted onto each panel and over the entire framework housing the rotors is obtained.

## Claims

1. Wind engine equipped with wind conveyors, characterized in that one or more rotors (1) have arranged in front of them, in the direction of arrival of the wind, one or more pairs of movable or fixed panels (2) arranged facing each other and mutually inclined, said inclination being such that the distance between the front external edges of the said panels is greater than the distance between the internal edges of the said panels located opposite the said rotors, said panels conveying the wind into the driving section of the rotors.

2. Engine according to Claim 1, of the type with a drum-type rotor, characterized in that it comprises:
- two drum-type rotors (1) which have axes of rotation parallel with one another and are arranged inside a single housing framework (3), said framework being fastened with the possibility of rotation onto a base (4) by means of a circular guide (7);
- two movable panels (2) fastened to the framework (3), said panels being arranged facing one another and inclined with an inclination decreasing towards the rotors (1) and having a longitudinal extension parallel to the axes of rotation of the rotors themselves;
- two deflectors (6) arranged facing one another and integrally fastened to the frame (3) on the same side thereof on which the movable panels (2) are mounted, said deflectors being positioned perpendicularly with respect to the said movable panels.

3. Engine according to Claims 1 and 2, characterized in that the inclination of the two movable panels (2) may be varied by means of drive elements (5) connecting each of said panels to the framework (3).

4. Engine according to Claims 1 and 2, characterized in that the rotors have a vertical axis.

5. Engine according to Claims 1 and 2, characterized in that the rotors have a horizontal axis.

6. Wind engine equipped with wind conveyors, characterized in that the framework (3) has integrally fastened to it one or more pairs of panels which are arranged facing one another and mutually inclined, each of said panels consisting of a plurality of flat elements which are slidable telescopically and stacked on top of one another when each panel is in the minimum opening position.
